# EUROPEAN PATENT APPLICATION

(11) **EP 1 296 211 A1**
(43) Date of publication of application: **26.03.2003**
(21) Application number: 00942443.3
(22) Date of filing: 30.06.2000
(51) Int. Cl.: G05B 19/418

(54) **SYSTEM FOR SUPPORTING NC MACHINING**

(71) Applicant: Mori Seiki Co., Ltd., Yamatokoriyama, Nara 639-1160 (JP); Okuma Corporation, Nagoya-shi, Aichi 462-0032 (JP); Yamazaki, Kazuo, Sacramento, CA 95814 (US)
(72) Inventor: YAMAZAKI, Kazuo, Sacramento, Ca 95814 (US); MORITA, Naoki, c/o Mori Seiki Co., Ltd., Yamatokoriyama-shi, Nara 639-1160 (JP); FUKAYA, Yasushi, c/o Okuma Corporation, Niwa-gun, Aichi 480-0193 (JP)
(74) Representative: Reinhard - Skuhra - Weise & Partner
(86) International application number: JP0004392
(87) International publication number: WO02003156

(57) **Abstract**

The present invention is characterized in that: a plurality of NC machine tools (28) each including NC program generating means and NC program improving and updating means are connected to a central manager (1) via a network; actual machining performance information is supplied to the central manager (1) from the respective NC machine tools (28); the central manager (1) generates databases (3 to 12) from the collected actual machining performance information and stores the database (3 to 12) therein; and the NC machine tools (28) are each permitted to retrieve information necessary for machining from the database (3 to 12).

## Description

### TECHNICAL FIELD

The present invention relates to an improved NC machining assisting system, which connects a plurality of NC machine tools to a central manager via a network, causes the central manager to collect and store machining know-how and the like through transmission of various types of information between the NC machine tools and the central manager, and permits the NC machine tools to freely use a database stored in the central manager. The NC machine tools each include NC program generating means, and NC program improving and updating means for improving the NC program generating means so as to generate an optimum program according to an actual machining state. In accordance with the present invention, various types of information can be collected from machining operations actually performed by the respective NC machine tools.

### BACKGROUND ART

NC machine tools are adapted to automatically control machine tool operations on the basis of an inputted NC program and, in recent years, have been widely employed in combination with microprocessor technology, power electronics technology or software technology as computer-controlled machine tools (CNC machine tools) in various industrial fields.

Numerical control information such as an NC program typically includes a tool selection command, a spindle rotation speed command, a cutting speed command, a feed rate command, an axial movement/interpolation command, an auxiliary function command and the like. Whenever a machining operation is to be performed, numerical control information suitable for a machine tool to be controlled for the machining operation is generated as an NC program.

When the machining operation is to be actually performed, the NC program should be modified and edited in various ways on a machining site. The machine tool is controlled for the machining operation by separately performing a simulation, a test-cut operation or an NC program adjusting operation in accordance with a machining environment unique to the machine tool or a tool on the site.

However, there is a problem such that a skilled operator is required for performing the simulation or the test-cut operation or for modifying and editing the program on the machining site, and a time-consuming preparatory operation is required for providing a program optimum for the actual machining operation.

A conventional approach to this problem is an NC machining assisting method which can modify and edit a program in an optimum manner on the basis of an actual machining performance record previously obtained by an NC machine tool having not only NC program generating means as described above but also NC program improving and updating means.

One example of the prior art is disclosed in WO98/19820 (PCT/JP96/03264). With reference to Fig. 1, an explanation will be given to the prior-art apparatus.

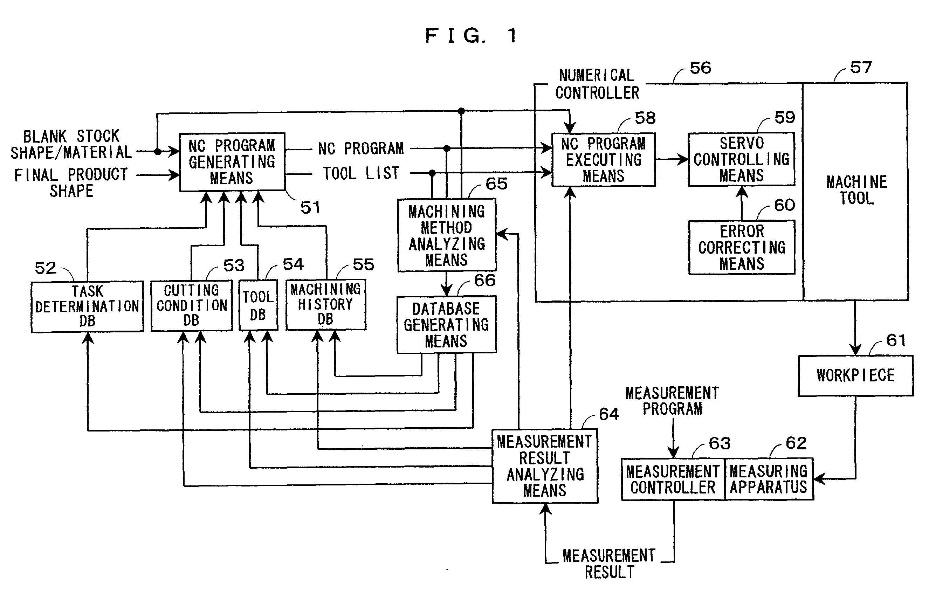

Fig. 1 illustrates the overall construction of a numerical control machine tool system employing an NC program analyzing method and apparatus. An NC program is generated by inputting blank stock data and a final product shape.

In Fig. 1, the blank stock shape data includes data indicative of a blank stock shape and a blank stock material. NC program generating means 51 generates a desired NC program on the basis of the inputted blank stock data and final product shape in consideration of know-how data previously inputted thereto from databases 52, 53, 54, 55 and accumulated therein. The databases 52, 53, 54, 55 include an task determination database 52, a cutting condition database 53, a tool database 54 and a machining history database 55. On-site know-how previously obtained, machining conditions required for an actual machining operation and conditions specific to a machine tool to be used are supplied as reference data to the NC program generating means 51 from these databases 52, 53, 54, 55 for the generation of the NC program.

The NC program thus generated and a tool list are supplied to a numerical controller 56. The NC program is subjected to necessary air-cut and test-cut operations or a simulation, and then modified and edited. Thus, a feasible machining NC program is completed, which is finally used on a machining site.

The numerical controller 56 includes NC program executing means 58, servo controlling means 59 and error correcting means 60 for driving the machine tool 57. The NC program, the tool list and the blank stock data are inputted to the NC program executing means 58. The NC program executing means 58 performs an interpolating process with reference to the results of measurement which will be described later, and supplies a servo control signal to the servo controlling means 59. The error correcting means 60 corrects errors occurring in the machine tool 57 due to a temperature change.

The machine tool 57 performs a desired machining operation on a workpiece 61 placed on a table in accordance with the NC program. The machining operation is first completed with the workpiece 61 kept in a first attitude. Then, a measuring apparatus 62 measures the coordinates of the workpiece 61 in accordance with a measurement program of a measurement controller 63, and the result of the measurement is fed back to the NC program executing means 58 of the numerical controller 56 and to machining method analyzing means 65 via measurement result analyzing means 64. As required, the measurement result is supplied to the databases 52, 53, 54, 55. Thus, the workpiece 61 is subjected to the desired machining operation under numerical control on the basis of the generated NC program. After the machining operation is completed with the workpiece 61 kept in the first attitude, the attitude of the workpiece 61 is changed, and the machining operation is continued in accordance with the NC program with the workpiece 61 kept in a second attitude.

The machining program, the tool list and the measurement result are supplied to the machining method analyzing means 65, and necessary machining information is extracted in accordance with a predetermined algorithm. The machining information thus extracted is supplied to database generating means 66. Machining conditions obtained through classification of the machining information for each elementary machining operation are written and stored in the corresponding databases 52, 53, 54, 55.

After the workpiece 61 is actually machined by the machine tool 57, machining information such as on-site know-how reflected on the actual machining operation is constantly incorporated in the databases 52, 53, 54, 55, so that the contents of the databases are updated. Thus, the contents of the databases can be reflected on a current machining operation. In general, the machining information can be supplied in the form of optimum databases when the next NC program is generated.

In the prior-art apparatus, the operation performed when the numerical control information is modified and edited is accumulated as reusable know-how. Therefore, the prior-art apparatus can solve the problem that the on-site know-how and the program modifying and editing data are prepared in reliance on a skilled operator working on the site and are poor in reusability. That is, the numerical control information, particularly the feasible machining NC program subjected to the modifying and editing operation, is analyzed by the NC program improving and updating means. Conversely, the on-site know-how and machining conditions, i.e., machining information or machining conditions optimum for a particular machining operation, can be extracted from the feasible machining NC program finally used for a machining operation in mass production on the machining site, and utilized in the form of databases. The machining information or the machining conditions thus extracted are systematically correlated with blank stock information, diagram information, machine information, tool information or measurement data, whereby an optimum machining method and optimum machining conditions specific to each machine can be extracted and an on-site machining program optimum for each case can instantaneously and automatically be generated on the basis of the fed-back databases. The data in these databases can be utilized by the machine tool per se and, in addition, supplied to other machine tools. By opening these databases to all machine tools incorporated in a CIM (computer integrated manufacturing) system, most of the databases can be utilized in an interactive manner without the need for performing the modifying and editing operations in reliance on a skilled operator.

In the prior-art apparatus and method, however, the aforesaid NC program improving and updating means is basically associated with the single NC machine tool, so that the databases are supplied to the other NC machine tools merely in the form of data stored in a floppy disk or the like. Therefore, the databases can be utilized only under conditions which significantly limit the versatility of the databases.

In view of the problems associated with the prior art, it is an object of the present invention to allow a plurality of NC machine tools to easily reuse actual machining performance information obtained by the respective NC machine tools for drastic improvement of the use efficiency of the machine tools.

It is another object of the present invention to allow not only an NC machine tool but also apparatuses associated with the NC machine tool and users thereof to easily use actual machining performance information for streamlining every operation.

### DISCLOSURE OF THE INVENTION

The present invention is characterized in that: a plurality of NC machine tools each including NC program generating means and NC program improving and updating means are connected to a central manager via a network; actual machining performance information is supplied to the central manager from the respective NC machine tools; the central manager generates a database on the basis of the collected actual machining performance information and stores the database therein; and the NC machine tools are each permitted to retrieve information necessary for machining from the database.

The central manager collects all types of actual machining performance information for machining operations in various fields, and supplies the actual machining performance information in the form of the database to the respective NC machine tools which are capable of mutually communicating with the central manager. Therefore, the machine tools can share the all types of actual machining performance information for reuse thereof.

Therefore, the use efficiency of the respective machine tools is drastically improved. A machine tool, even if having no performance record for a certain machining operation, can select machining conditions optimum for the machining operation.

An NC machining assisting system according to the present invention is characterized in that: a plurality of NC machine tools each including NC program generating means and NC program improving and updating means are connected to a central manager via a network; actual machining performance information is supplied to the central manager from the respective NC machine tools; the central manager generates a database on the basis of the actual machining performance information collected via the network and stores the database therein; and an apparatus other than the NC machine tools which has a network connecting function is permitted to retrieve information necessary for machining from the database through connection to the central manager via the network.

In the present invention, the central manager collects all types of actual machining performance information for machining operations in various fields. Therefore, not only the NC machine tools but also a tool maker or a machine supplier, or a user placing a machining order can utilize the various types of information through the connection to the central manager. For example, a terminal provided on the side of a tool maker, a CAM vender, an NC machine tool maker, a machining ordering company or a jig/holder maker is connected to the central manager via the network to feed back thereto information such as optimum tool conditions. Thus, an optimum tool can be supplied to a machine tool whenever required. Likewise, various types of support can be provided.

The inventive NC machining assisting system is further characterized in that the actual machining performance information includes at least one of workpiece information, tool information, cutting condition information, jig information, machine specification information, machining history information, machine operation history information, tool use history information and jig use history information.

Actual operation performance information such as a machining history, a machine operation history, a tool use history and a jig use history obtained during a machining operation is included in the actual machining performance information, whereby optimum operation information for an NC machine tool can be supplied to an NC machine tool maker and a user. This is useful for a maintenance service, a sales strategy, estimation of labor costs, and improvement of jigs.

### BRIEF DESCRIPTION OF THE DRAWINGS

Fig. 1 is a diagram illustrating a prior-art NC machine tool including NC program generating means and NC program improving and updating means;

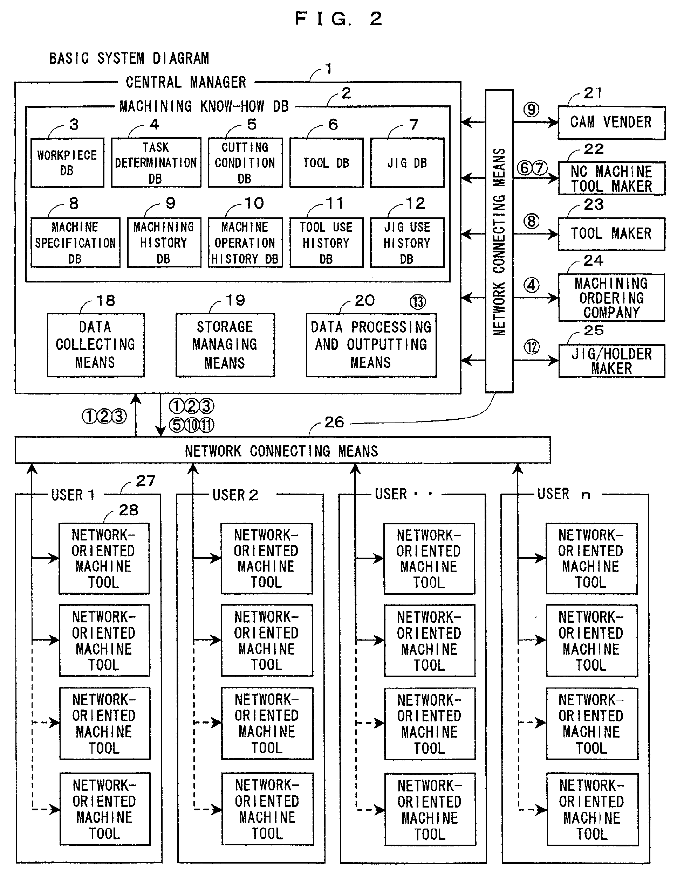

Fig. 2 is a diagram illustrating the overall construction of an NC machining assisting system according to the present invention, wherein the flow of data is indicated by arrows, and data contents are: ① comprehensive management of machining know-how over a network; ② comprehensive management of an actual operation performance record over the network; ③ accuracy information; ④ marketing and contract of machining operations; ⑤ maintenance service support; ⑥ sales strategy support; ⑦ new product development support (marketing); ⑧ tool information; ⑨ sales to a CAM vender; 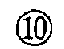 statistic data output; 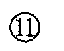 confirmation display; 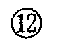 jig/holder information; and 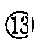 data processing and output;
Fig. 3 is a diagram illustrating a network-oriented NC machine tool having a network connection interface, and including NC program generating means and NC program improving and updating means in accordance with the present invention;
Fig. 4 is a diagram illustrating a workpiece database according to the present invention;
Fig. 5 is a diagram illustrating a task determination database according to the present invention;
Fig. 6 is a diagram illustrating the content of a tool path file according to the present invention;
Fig. 7 is a diagram illustrating a cutting condition database according to the present invention;
Fig. 8 is a diagram illustrating a tool database according to the present invention;
Fig. 9 is a diagram illustrating a jig database according to the present invention;
Fig. 10 is a diagram illustrating a machine specification database according to the present invention;
Fig. 11 is a diagram illustrating a machining history database according to the present invention;
Fig. 12 is a diagram illustrating a machine operation history database according to the present invention;
Fig. 13 is a diagram illustrating a tool use history database according to the present invention;
Fig. 14 is a diagram illustrating a jig use history database according to the present invention;
Fig. 15 is a diagram illustrating how to search a machining know-how database or the like according to the present invention;
Fig. 16 is a diagram illustrating how to search the machine operation history database or the like according to the present invention;
Fig. 17 is a diagram illustrating how to search the tool use history database or the like according to the present invention; and
Fig. 18 is a diagram illustrating how to search the machining know-how database or the like according to the present invention.

### BEST MODE FOR CARRYING OUT THE INVENTION

Terms herein used will first be explained, and then the present invention will be described with reference to Figs. 2 to Fig. 18.
MACHINING PRODUCT MODEL: A set of machining part groups which includes all shape elements of a final product. Accuracy in relationship between the machining part groups is attributed to the machining product model.
MACHINING PART GROUP: A set of machining parts which includes some of the shape elements of the final product and is obtained by machining a blank stock fixed by means of a jig and the like by a single chucking operation. Accuracy in relationship between the machining parts is attributed to the machining part group.
MACHINING PART: A set of one or more machining elements which includes a combination of machining shapes respectively represented by the machining elements and defines a machining shape characteristic. Examples of the machining part include parts obtained by hole machining, core machining, pocket machining and groove machining, and each having one or more machining elements . A machining accuracy for each machining part is attributed to the machining part.
MACHINING ELEMENT: A shape obtained by machining with the use of a single tool and characterized by the tool. The machining element basically represents a shape obtained by machining with the use of a single tool. Where a tool such as a two-point cutting tool is employed to reduce the number of tools for a plurality of machining tasks which cannot simultaneously be performed, however, shapes resulting from the machining tasks are regarded as different machining elements. Where a tool such as a chamfer tap is employed for a plurality of machining tasks which can simultaneously be performed, shapes resulting from the machining tasks are regarded as a single machining element.
PROCESS DETERMINATION MODEL: A process determination model is defined in one-to-one correspondence to the machining product model.
PROCESS: A set of part machining operations to be performed on a blank stock fixed by means of a jig and the like by a single chucking operation, and defined in one-to-one correspondence to the machining part group. The process also includes blank stock chucking information. Where part machining operations are performed one after another on a blank stock fixed on an indexing table by angularly indexing the blank stock, the part machining operations are regarded as belonging to a single process. However, where the attitude of the blank stock is automatically changed by detaching the blank stock by means of a machine (for example, where the blank stock is transferred between spindles of a combined machine tool), the part machining operations are regarded as belonging to different processes.
PART MACHINING OPERATION: A set of machining tasks defined in one-to-one correspondence to the machining part. The types of the machining tasks and a machining sequence are attributed to the part machining operation. MACHINING TASK: The machining task is defined in one-to-one correspondence to the machining element. A specific to-be-used tool, a tool path and cutting conditions such as a cutting speed, a feed and a cutting amount are attributed to the machining task.

A basic system diagram (Fig. 2) illustrates the overall construction of an inventive system, in which a central manager 1 and various databases provided in the central manager are connected to users 27, network-oriented machine tools 28, and machine tool-related companies such as a CAM vender 21, an NC machine tool maker 22, a tool maker 23, a machining ordering company 24 and a jig/holder maker 25 which each utilize the databases via network connection means 26 over a network.

The central manager 1 has a know-how database 2 including a workpiece database 3, a task determination database 4, a cutting condition database 5, a tool database 6, a jig database 7, a machine specification database 8, a machining history database 9, a machine operation history database 10, a tool use history database 11 and a jig use history database 12. The central manager 1 includes data collecting means 18 for collecting data for the databases, storage managing means 19 for storage management, and data processing and outputting means 20 which outputs not only data under the storage management but also data obtained by processing the data under the storage management in response to a request from a user or the like connected to the network. The flow of the data is indicated by arrows in Fig. 2, and data contents are generally indicated by ① to 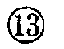

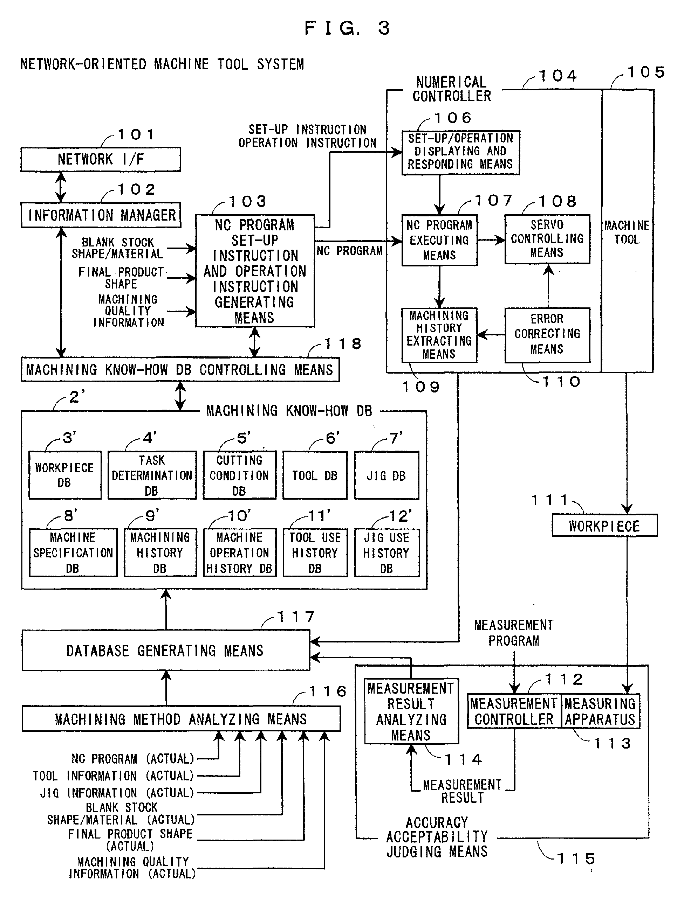

A network-oriented machine tool system diagram (Fig. 3) illustrates the construction of each of the network-oriented machine tools 28 shown in the basic system diagram (Fig. 2).

Machining information for metal machining is generally transmitted in the form of diagram data, and includes information on a blank stock shape, a blank stock material and a final product shape, and accuracy information (machining quality information) such as a surface roughness, a dimensional tolerance, a verticality tolerance and a cylindricality tolerance. NC program set-up instruction and operation instruction generating means 103 analyzes the machining information, and retrieves useful information from a machining know-how DB 2' via machining know-how DB controlling means 118 for optimum improvement and update NC program, and for generation of set-up information and operation instruction information. The machining know-how DB 2' includes a workpiece database 3', a task determination database 4', a cutting condition database 5', a tool database 6', a jig database 7', a machine specification database 8', a machining history database 9', a machine operation history database 10', a tool use history database 11' and a jig use history database 12' having the same data configurations as the corresponding databases provided in the central manager 1. (These databases have the same data configurations as the databases having the same names in the central manager 1 in the best mode for carrying out the present invention, but this arrangement has no limitation. Where different data configurations are to be employed, data interface means may be provided for accommodating differences in data configuration.)

The set-up instruction information and the operation instruction information generated by the NC program set-up instruction and operation instruction generating means 103 are supplied to set-up/operation displaying and responding means 106, and displayed thereon. The set-up/operation displaying and responding means 106 is provided in a numerical controller 104 in the network-oriented machine tool system diagram (Fig. 3), but may be provided in a computer or a display terminal disposed within an operation range of a machine operator so that the machine operator can view the displayed information and respond to the information. The machine operator performs an operation in accordance with the information displayed on the set-up/operation displaying and responding means 106. In response to the start and end of the operation, information on an operation start time and an operation end time is detected by machining history extracting means, and outputted to database generating means 117 thereby to be recorded in the machine operation history database.

An NC program generated by the NC program set-up instruction and operation instruction generating means 103 is supplied to NC program executing means 107, and a machining operation is started by the machine operator. The machining operation is performed in response to a command outputted to a servo controlling means 108 from the NC program executing means 107. In association with the NC program executing means, error correcting means 110 outputs a command to the servo controlling means 108 for error correction. The information for the numerical control is extracted by machining history extracting means 109, and supplied to the database generating means 117 thereby to be stored in the corresponding databases in the machining know-how database 2'. Accuracy acceptability judging means 115 judges the acceptability of a workpiece 111 machined by a machine tool 105. In the accuracy acceptability judging means 115, a measurement program is supplied to a measurement controller 112, and a measurement is performed on the workpiece 111 by a measuring apparatus 113. The result of the measurement is supplied to measurement result analyzing means 114, and the result of an analysis is recorded in the machining know-how database 2' by the database generating means 117. The aforesaid accuracy measuring method is merely an example, but the measurement may be performed in the machine tool 105 or performed by a measuring operator with the use of a measuring instrument. Further, the acceptability may be judged by visual inspection. In any cases, the result is recorded in the machining know-how database 2' by the database generating means 117.

Further, actual performance data such as an NC program, tool information, jig information, a blank stock shape and material, a final product shape and machining quality information which are obtained by a machining operation performed with the use of a machine tool not having the aforesaid automatic or semiautomatic data recording means may be inputted to machining analyzing means 116, and the result of an analysis may be recorded in the machining know-how database 2' by the database generating means 117.

The information thus recorded may be outputted to the machining know-how database 2 in the central manager 1 via an information manager 102 by a network I/F 101, and will be retrieved by the NC program set-up instruction and operation instruction generating means 103. As required, the data may be transmitted from the machining know-how database 2 in the central manager 1 to the machining know-how database 2' provided in the user's network-oriented machine tool 28. At this time, the information manager 102 may control information which the user does not desire to disclose and open information which the user does not desire to obtain. The information manager 102 is provided in the network-oriented machine tool 28 in the network-oriented machine tool system diagram (Fig. 3), but may be provided in an optimum physical position depending on the purpose of the information control.

The inventive machining assisting system is used in the following manner.
(a) The central manager comprehensively manages machining know-how via the network.

The network-oriented NC machine tools incorporated in the system respectively provide actual machining know-how to the central manager via the network. The information thus provided includes basic information such as a workpiece type, a workpiece shape, a finished shape, a tool type, a holder type, a jig type, a jig holding force, an accuracy requirement and a surface roughness. The collected machining information is analyzed by the central manager, and stored in a required database form. Therefore, the machine tools can each retrieve machining information such as a feed rate, a spindle rotation speed, a cutting width, a tool determination sequence and a cutter path pattern optimum for a specific machining operation or an actual accuracy record from these databases.
(b) The central manager comprehensively manages actual operation performance records via the network.

In general, an NC machine tool remarkably differs in operation efficiency depending on use conditions thereof. Since the central manager can collect actual operation performance records from the multiplicity of NC machine tools via the network, the actual operation performance records which are classified according to a machining type can widely be supplied from the central manager to the NC machine tools or users thereof connected to the system. Thus, the users can freely utilize a machine operation history, a machining history, a tool use history, a jig use history and the like.
(c) The central manager comprehensively manages tool information via the network.

The actual machining performance information supplied from the NC machine tools includes tool information. Therefore, the central manager can widely supply information on an optimum tool or the statistic use frequency and service life of the tool for each type of machining operation in a database form. Thus, the central manager can provide information essential for selecting a tool to be actually used in a machine tool, for designing a new tool by a tool maker or for selecting a company to be supplied with a tool.
(d) The central manager comprehensively manages accuracy information for each machining operation via the network.

Conventionally, accuracy information such as an accuracy requirement and an actual accuracy record has rarely been open to the public. In accordance with the present invention, the accuracy information for each actual machining operation can very easily be collected by the central manager via the network. Therefore, the accuracy information collected by the central manager can be correlated with a machining type or a tool type, and open to the users.

In accordance with the present invention, the databases comprehensively managed by the central manager can be used for various purposes as described above. These databases are statistically processed as required, and provided in a desired data form to a user as required.

The databases comprehensively managed by the aforesaid central manager are utilized for maintenance service support of the respective NC machine tools. Thus, maintenance services can be optimally performed on the basis of operation history information and performance degradation information for each operating component.

In accordance with the present invention, the databases described above can be utilized for strategic support of sales of tools, auxiliary machines and machine tools, depending on how to use the system on each terminal connected to the system.

The databases according to the present invention can be used for contract and marketing of machining operations, for new product development support or for sales information to the CAM vender.

Data input, and data processing and output according to the present invention will hereinafter separately be described more specifically.

### (1) Data input

### (a) In the system described above, the central manager comprehensively manages the machining know-how via the network in the following manner.

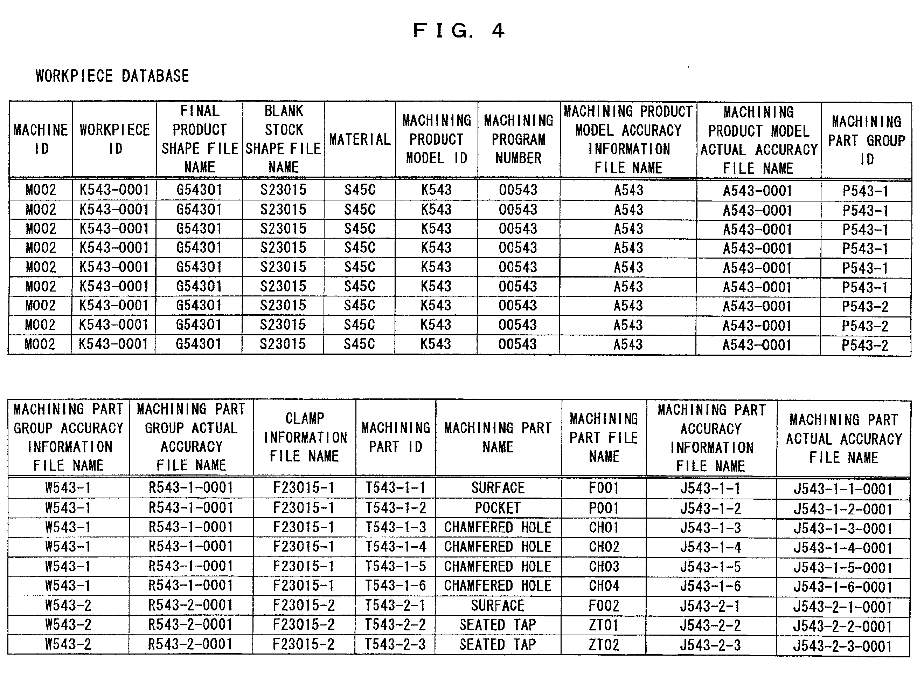

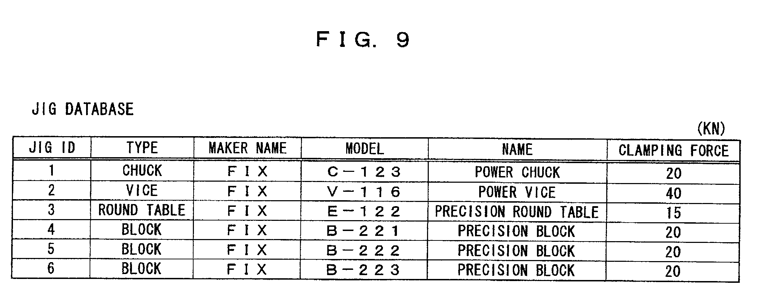

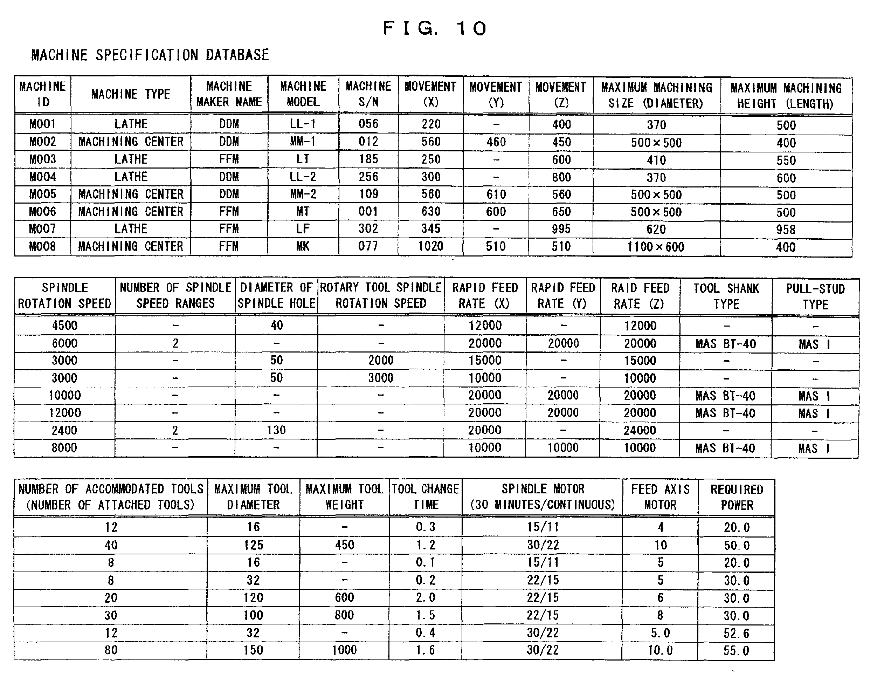

The machining quality information such as blank stock shape and material information, final product shape information and accuracy information contained in a diagram is assigned a machining product model ID as indicated in a workpiece database (Fig. 4), and temporarily registered in the form of a final product shape file, a blank stock shape file and a blank stock material. The final product shape is analyzed in terms of configurational characteristics, whereby a machining product model is subdivided into machining part groups, then into machining parts, further into machining elements. The machining part groups and the machining parts are assigned machining part group IDs and machining part IDs, respectively, and temporarily registered. Machining part names which represent the configurational characteristics of the respective machining parts may be employed as the machining part IDs. The machining quality information is subdivided correspondingly to the aforesaid subdivision, and temporarily registered in the form of a machining product model accuracy information file, a machining part group accuracy information file and a machining part accuracy information file. When a machining operation is actually performed by means of the machine tool 105, a machine ID of the machine tool employed for the machining operation and a workpiece ID assigned to a workpiece are added to the temporarily registered information. A machining product model actual accuracy file, a machining part group actual accuracy file, a machining part actual accuracy file as measurement results of accuracy and a clamp information file containing workpiece clamp information are formally registered. A machining program number indicative of a machining program used for the machining operation is also registered. The clamp information file includes a jig ID, and a jig type, a jig maker, a jig model, a jig name and a jig clamping force as shown in the jig database (Fig. 9) can be obtained therefrom. The machines which supply information to the network in the basic system diagram shown in Fig. 2 are each assigned a machine ID so as to be uniquely distinguished from each other. Information as shown in the machine specification database (Fig. 10) is preliminarily registered as the machine specification information, and includes data indicative of the characteristics of the machines.

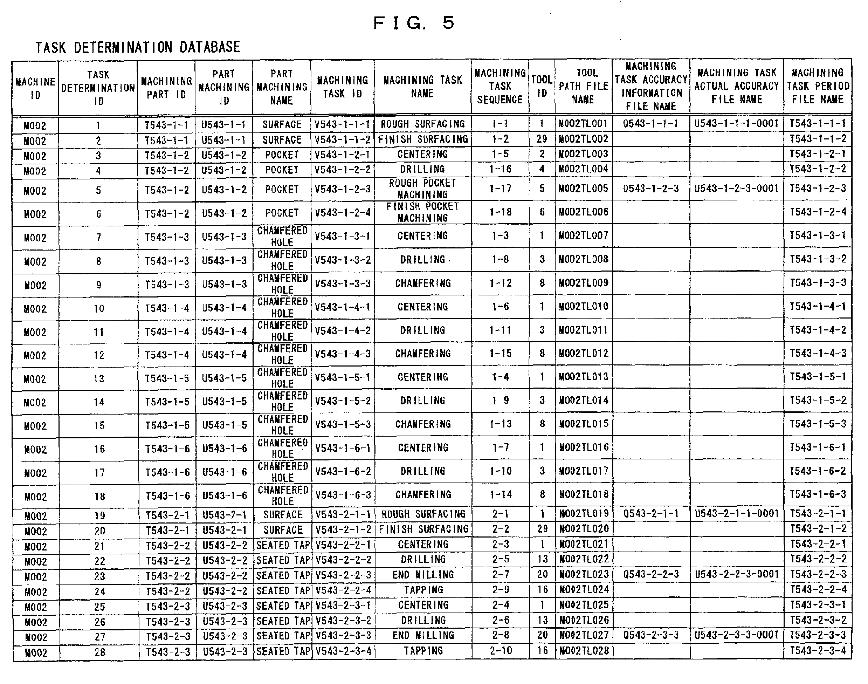

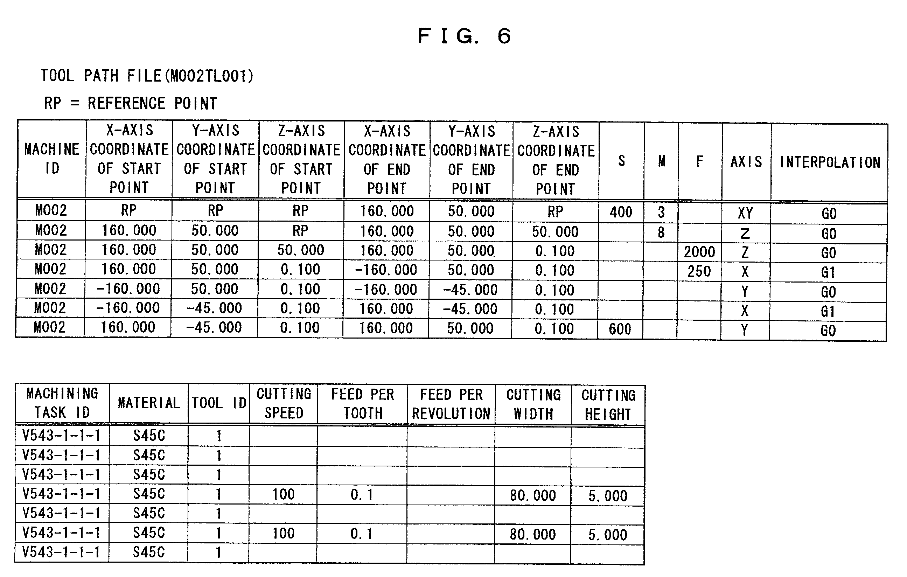

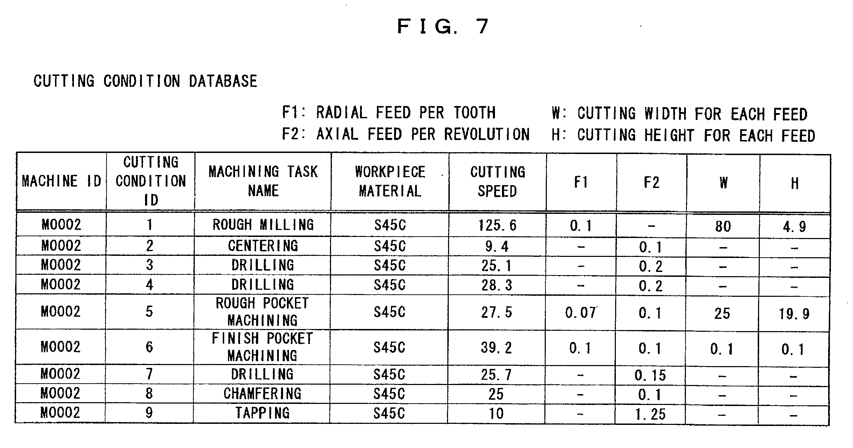

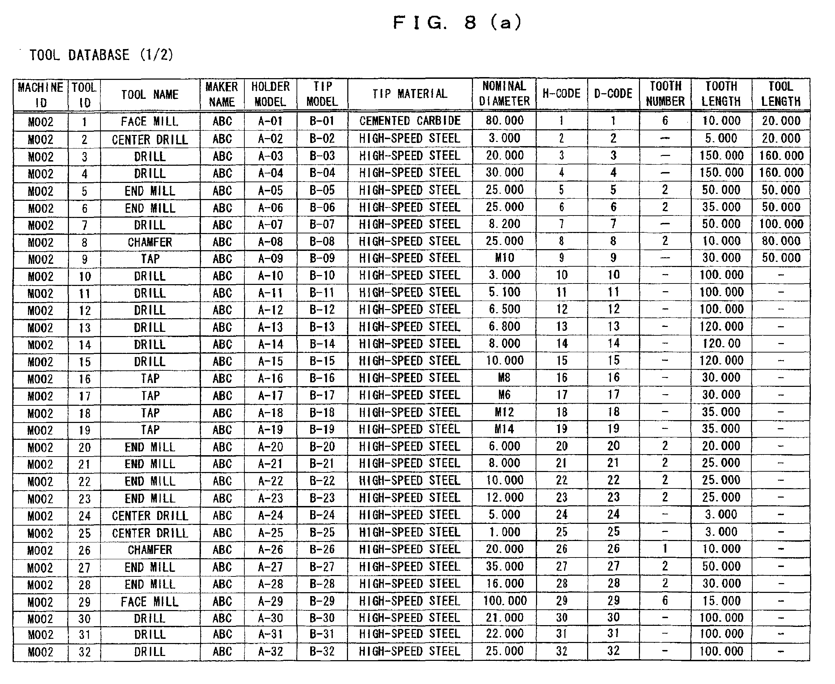

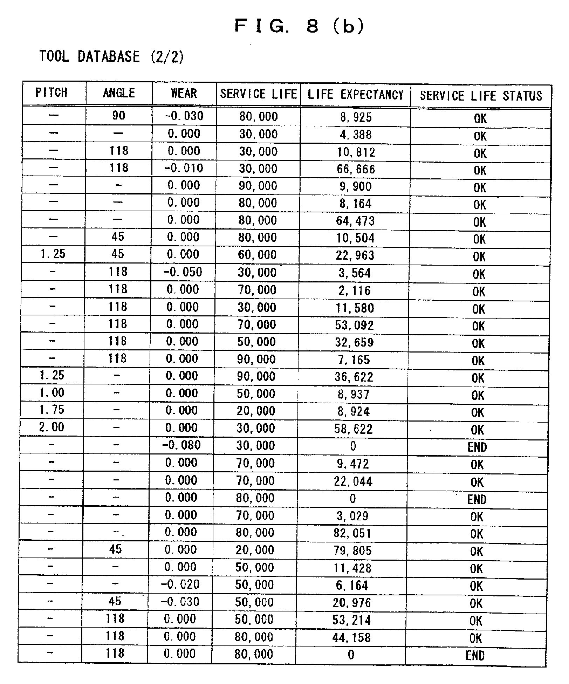

When the aforesaid machining part ID is applied, the task determination database (Fig. 5) determines a part machining operation which is defined in one-to-one correspondence to a machining part in terms of machining characteristics. An ID is assigned to the part machining operation. A part machining operation name which represents the machining characteristic of the part machining operation may be assigned to the part machining operation. The part machining operation is subdivided into machining tasks. An ID is assigned to each of the machining tasks. A machining task name which represents the machining task may be assigned to the machining task. When the machining tasks are determined, machining sequence numbers are provided to the machining tasks in the most efficient manner for determination of a machining task sequence. Then, the most efficient tools and the most efficient cutting conditions are selected, and a cutter path is determined to provide a tool path file. If proper cutting conditions cannot be found, the cutting conditions may be obtained from the general-purpose cutting condition database shown in a cutting condition database diagram (Fig. 7). After the machining operation is actually performed under the optimum cutting conditions, the optimum cutting conditions are employed for the next machining operation. The tool path file includes a machine ID, a tool ID, a tool path (X-, Y- and Z-axis coordinates of a start point and X-, Y- and Z-axis coordinates of an end point) , and cutting conditions such as a spindle rotation speed, a feed and a cutting speed as shown in a tool path file diagram (Fig. 6). Tool IDs are recorded in the tool database as shown in tool database diagrams (Fig. 8(a) and 8 (b)), and the tool database includes data indicative of tool characteristics such as a tool name, a tool maker name, a holder model number, a tip model number and a nominal diameter. The tool database further includes tool attaching information such as an H-code, a D-code, an tooth length and a tool length, and tool service life information such as a wear amount, a service life, a life expectancy and a service life status. When an accuracy test is required during the machining operation, a machining task accuracy information file is generated. The data described above is temporarily registered in the task determination database, and formally registered together with the machine ID and the machining task actual accuracy file when the machining operation is actually performed. Upon completion of the actual machining operation, a machining period for each of the machining tasks is registered in the form of a machining task file.

### (b) The central manager comprehensively manages actual operation performance records via the network in the following manner.

A method and apparatus for determining the operation balance of each machine are disclosed in WO00/11582 (PCT/JP98/03747). In the method and apparatus, the states of machining operations actually performed by NC machine tools and the like are monitored and analyzed so as to determine the operation balance of each of the machines during a given period. That is, the operation state of the machine is detected as an income/expenditure-related operation of the machine by monitoring and analyzing the state of the execution of an NC program, and the operation balance is calculated on the basis of the income/expenditure-related operation of the machine. As a result, the profit ratio of the machine during the given period is determined, allowing for effective use of the machine.

In accordance with the present invention, the central manager manages the information on the management of the income/expenditure balance via the network.

Labor costs may be estimated or an advice for improvement of a jig may be provided on the basis of information on an operation period, an actual machining performance record, an actual tool use record, an actual set-up record and the like. Information on a period that the door is opened may be obtained for determination of a set-up period. Information on a cycle start period may be obtained for determination of an automatic operation period.

Besides, information on a spindle rotation period, a feed distance, the number of times of ATC, a cutting fluid, three-dimensional probe data, a lubricating oil, a power supply period, a machining history for each product (the result of an acceptability test) may be inputted in the following manner.

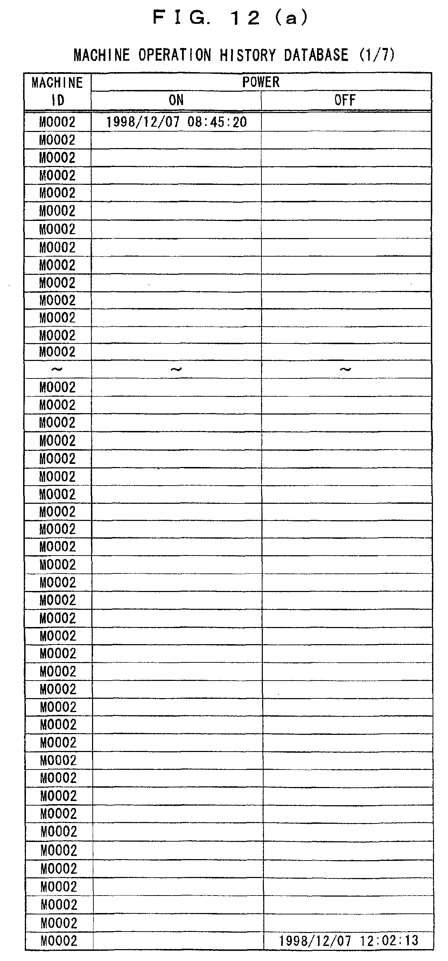

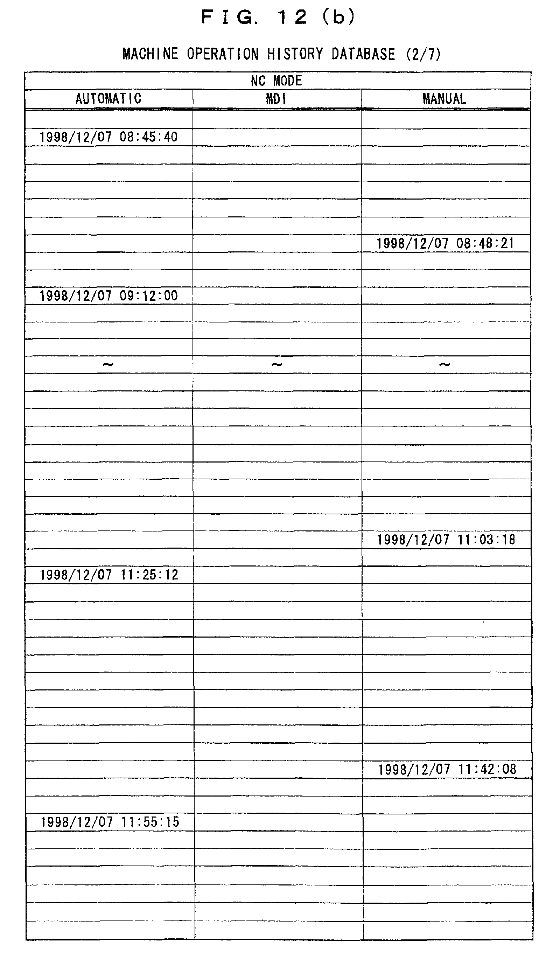

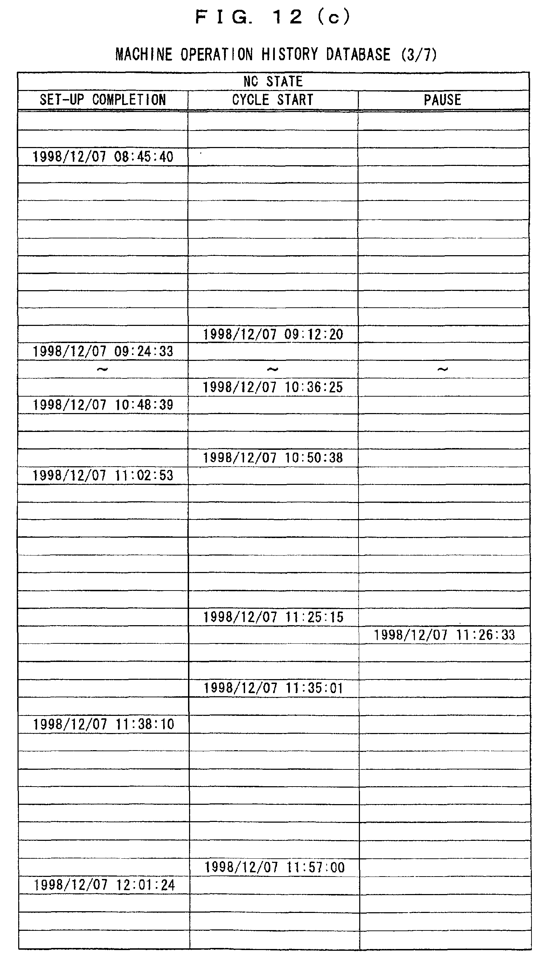

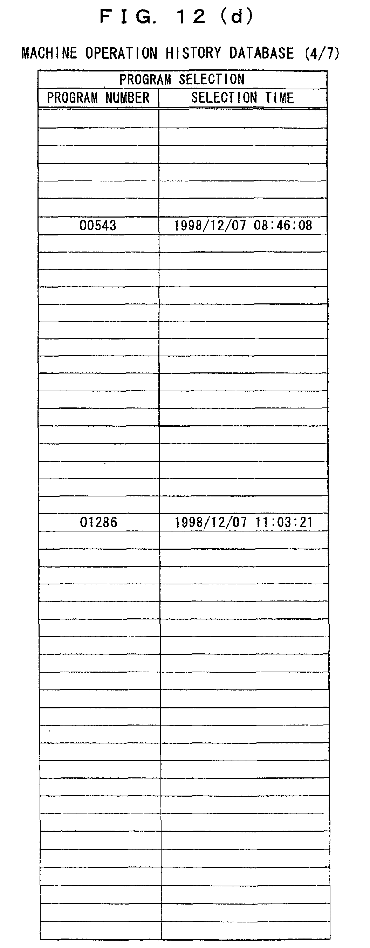

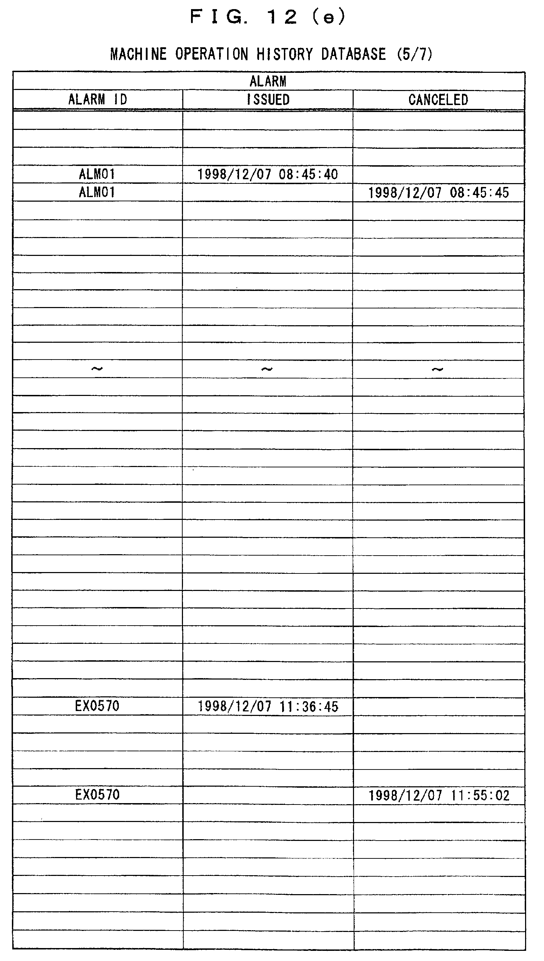

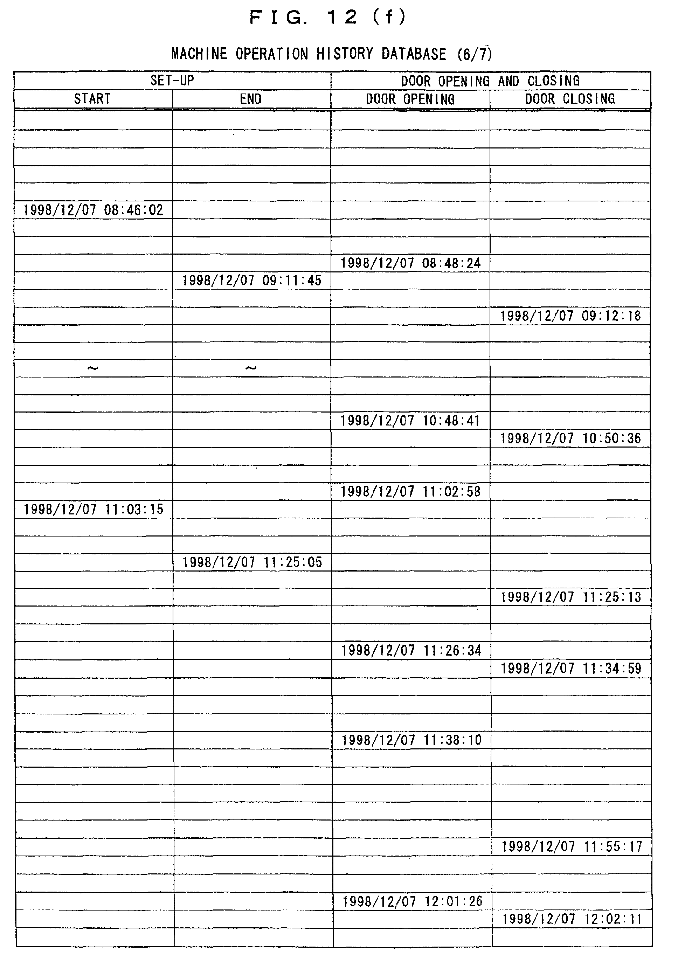

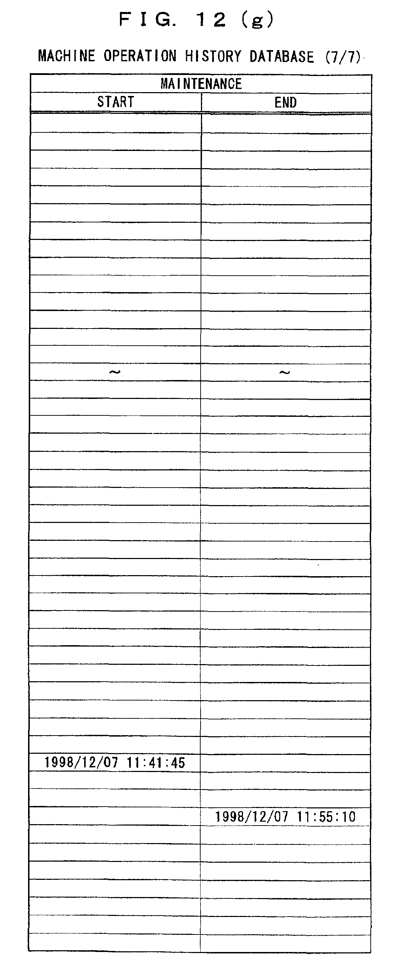

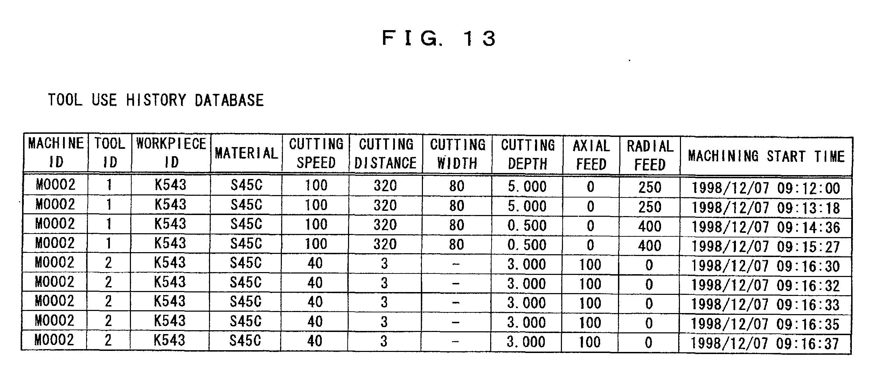

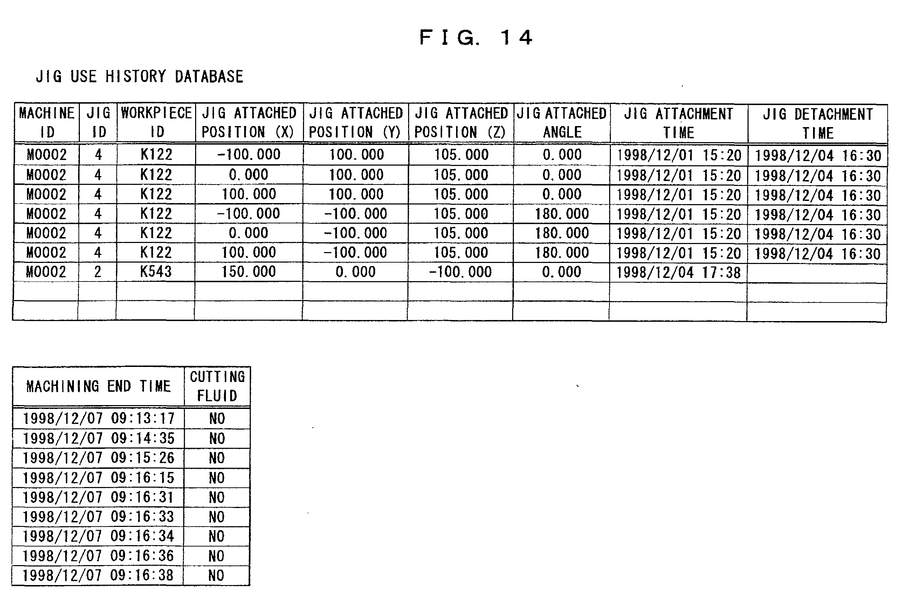

Information on a power on/off operation, an NC mode, an NC state, program selection, an alarm, a set-up operation and a door opening and closing operation for each of the machine tools is registered in the machine operation history database (Figs. 12(a) to 12(g)) via the machining history extracting means 109 and the database generating means 117. Data on the feed distance and the cutting fluid is registered in the tool use history database (Fig. 13) whenever a tool is used. The jig use history is shown in Fig. 14. The date and time at which an operator reports the start of a set-up operation or the end of the set-up operation by means of the set-up/operation instruction displaying and responding means 106 is registered as a jig attachment date and time or as a jig detachment date and time in the jig use history.

### (c) The central manager comprehensively manages the tool information via the network in the following manner.

Tool information stored in a machine tool can be employed for the tool management, the cutting condition management and the actual cutting performance management of the machine tool. In addition, tool information such as tool use conditions (cutting conditions) and a tool use period (tool use amount) obtained when a tool is actually used by a customer can be provided as actual performance information to a tool maker. A tool information data accumulation method and a tool management system, which are very useful for customer management by the tool maker, are disclosed in WO00/12259 (PCT/JP98/03834).

For preparation of tool information database for NC machining, a tool management system utilizing the tool information database according to the prior art accumulates actual cutting data associated with information on a used tool, NC command information, tool correction information and spindle load information obtained during an actual machining operation, and feeds back the actual cutting data as tool information based on an actual cutting performance to a tool manager or a tool maker.

In the prior-art apparatus, at least NC program execution block information and tool information currently in use are extracted from an NC program executing section and a tool database of a machine, respectively, and accumulated in association with the actual cutting data obtained during the actual machining operation for the preparation of the tool information database. Further, the tool information can be transferred to the tool manager or the tool maker via the network or with the use of a recording medium. As a result, the tool information based on the actual cutting performance can automatically be accumulated in the tool information database without the intervention of the operator during the actual machining operation. Further, the tool information database can be supplied to the tool maker, and more precise technical information obtained under specific machining conditions by a customized or specific machining method can be fed back from the tool maker.

In accordance with the present invention, the central manager manages the tool information via the network.

An optimum tool, the statistic use frequency of the tool, the machining service life of the tool or the like for each type of machining operation can be determined on the basis of the information in the accuracy information file and the actual accuracy file associated with the workpiece database (Fig. 4), the machining task information in the task determination database (Fig. 5) and the information in the tool path file (Fig. 6) associated with the machining tasks. Further, the information essential for selecting a tool to be actually used in a machine tool, for designing a new tool by a tool maker and for selecting a company to be supplied with a tool can be obtained.

### (d) The central manager comprehensively manages accuracy information for each machining operation via the network.

Conventionally, information on accuracy requirements and actual accuracy records has rarely been open to the public.

In accordance with the present invention, the central manager manages the accuracy information via the network.

As described above, an accuracy requirement for a workpiece, and a machine, a tool and cutting conditions employed for a machining operation to satisfy the accuracy requirement are stored together with an actual accuracy record for management thereof. Thus, the machine, the tool and the cutting conditions necessary for the machining operation to satisfy the accuracy requirement can easily be obtained.

### (2) Data processing and output

An explanation will be given to the data processing and output comprehensively managed by the central manager via the network.
(a) In the aforesaid system, machining know-how comprehensively managed by the central manager is provided to a user of an NC machine tool connected to the central manager via the network in the following manner.

In the central manager, the machining know-how includes the workpiece database (Fig. 4), the task determination database (Fig. 5), the cutting condition database (Fig. 7) and the tool database (Fig. 8), the jig database (Fig. 9), and various files associated with these databases, for example, the final product shape file, the blank stock shape file and the workpiece product model accuracy information file associated with the workpiece database.

An explanation will be given to how to supply the machining know-how comprehensively managed by the central manager to a user who desires to refer to or obtain the machining know-how, for example, to an operator of a machine tool or a CAM vender connected to the network.

Where the user of the NC machine tool desires to refer to or obtain machining know-how in the central manager for machining a machining part specified in a machining diagram, for example, a request for referring to the machining know-how for the desired machining part is applied to the data processing and outputting means 20 of the central manager 1 via the information manager 102 and the network I/F 101.

The data processing and outputting means 20 searches databases such as the workpiece database 3 and the task determination database and files associated with these databases to extract a machining task sequence for the machining part, and cutting conditions, a tool, a tool path and a machining task accuracy for each machining task, and outputs the results of the search as output data to the machine tool which requests the information. The output data may include not only the search results but also sort data. That is, the search results each including information on the cutting conditions and the tool path for the machining part can be outputted after being sorted in increasing order of machining period, because a machining period for each machining task is registered in the form of a machining task period file in the task determination database of Fig. 5.

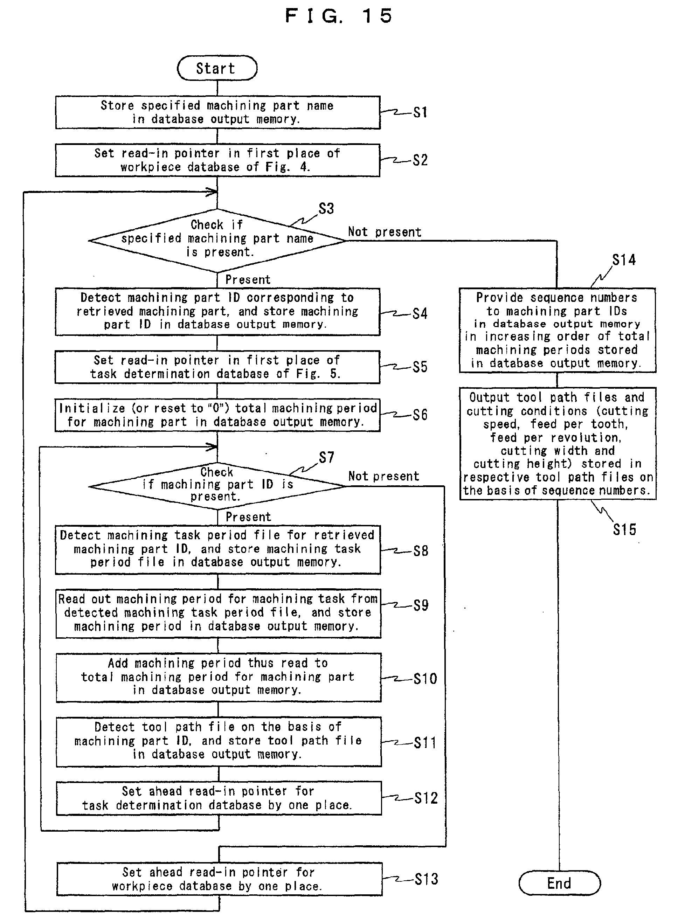

With reference to a flow chart of Fig. 15, an explanation will hereinafter be given to a case where the name of a machining part is specified for database search, and the results of the search each including information on a machining path and cutting conditions for the machining part are outputted after being sorted in increasing order of machining period. A database output memory used in the following explanation is a memory provided in the data processing and outputting means 20 shown in Fig. 1.

In S1, the specified machining part name is stored in the database output memory. In S2, a read-in pointer for the workpiece database shown in Fig. 4 is set in the first place of the database.

In S3, the workpiece database shown in Fig. 4 is searched for the specified machining part name on the basis of the read-in pointer for checking if the machining part name is present therein. If the machining part name is not present, the database search for the specified machining part is completed, and the process goes to S14. If the machining part name is present, the process goes to S4 to further retrieve information on the specified machining part.

In S4, a machining part ID corresponding to the retrieved machining part is detected, and stored in the database output memory. In S5, a read-in pointer for the task determination database shown in Fig. 5 is set in the first place of the database. In S6, a total machining period for the machining part in the database output memory is initialized (or reset to "0").

In S7, the task determination database shown in Fig. 5 is searched for the machining part ID on the basis of the read-in pointer for the task determination database for checking if the machining part ID is present therein. If the machining part ID is not present, the database search for all machining tasks for the machining part is completed, and the process goes to S13. If the machining part ID is present, the process goes to S8 to further retrieve information on the machining tasks.

In S8, a machining task period file for the retrieved machining part ID is detected, and stored in the database output memory. In S9, a machining period for the machining task is read out of the detected machining task period file, and stored in the database output memory. In S10, the machining period thus read out is added to the total machining period for the machining part in the database output memory. The results of the search will be sorted later on the basis of the total machining period thus calculated. In S11, a tool path file is detected on the basis of the machining part ID, and stored in the database output memory.

In S12, the read-in pointer for the task determination database is set ahead by one place, and the process goes to S7 for retrieving the next machining task from the database.

In S13, the read-in pointer for the workpiece database is set ahead by one place, and the process goes to S3 for retrieving the next machining part.

When all information is retrieved on the basis of the specified machining part name, sequence numbers are provided to the machining part IDs in the database output memory in increasing order of the total machining periods for the machining part stored in the database output memory in S14. In S15, tool path files and cutting conditions (a cutting speed, a feed per tooth, a feed per revolution, a cutting width and a cutting height) stored in the respective tool path files are outputted on the basis of the sequence numbers.

The output data may be employed simply for reference. In addition, the output data may be taken into a database of a machine tool which requests the data via the network. Similarly, the CAM vender can refer to or obtain the machining know-how in the central manager via the search network I/F 101 and the information manager 102. That is, the CAM vender specifies desired machining know-how and activates the data processing and outputting means 20 to obtain or refer to the specified machining know-how from the databases such as the task determination database managed by the central manager.
(b) An actual operation performance record comprehensively managed by the central manager is provided to a user of an NC machine tool connected to the central manager via the network in the following manner.

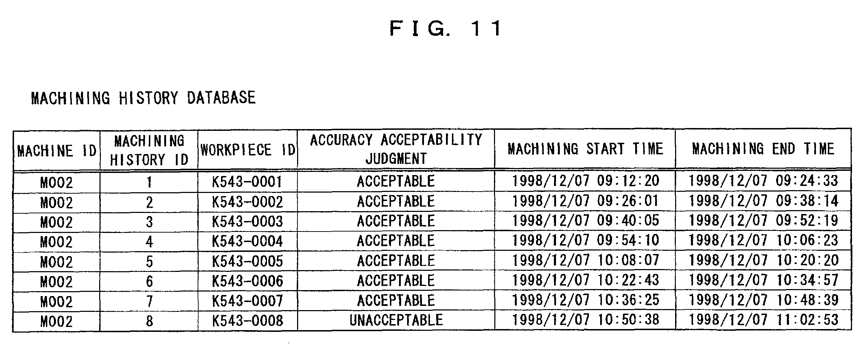

The central manager retains machining know-how typified by the workpiece database (Fig. 4) and the task determination database (Fig. 5) described above, and actual operation performance information such as the machining history database (Fig. 11), the machine operation history database (Fig. 12), the tool use history database (Fig. 13) and the jig use history database.

An explanation will be given to a case where a user, e.g., an NC machine tool maker connected to the network, desires to refer to the actual operation performance information comprehensively managed by the central manager.

Where the NC machine tool maker desires to check the operation state of a machine supplied to a user from the maker, for example, the maker sends a request for information on the operation state of the machine during a specific period to the data processing and outputting means 20 and specifies the ID of the machine and the period via the information manager 102 and the network I/F 101.

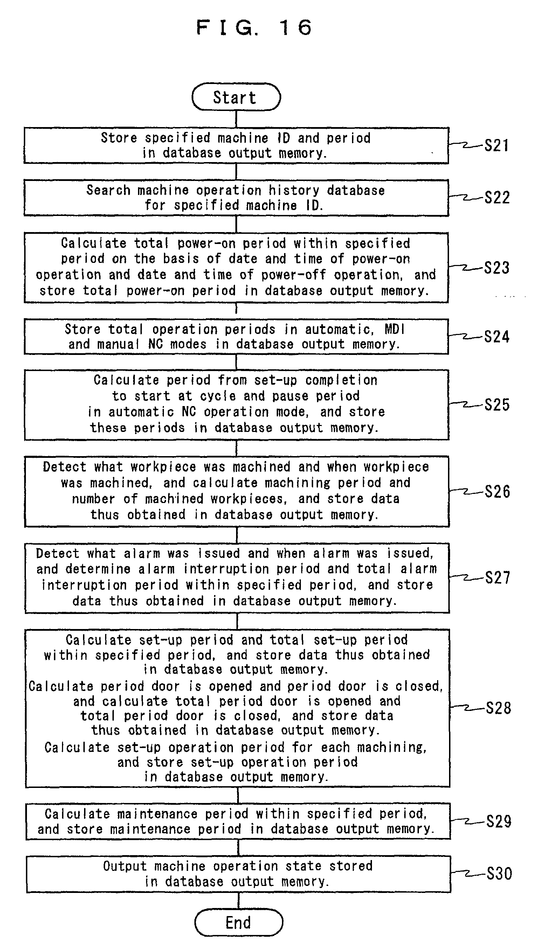

The data processing and outputting means 20 collects the operation history of the machine from the machine operation history database on the basis of the specified machine ID, and outputs the operation history. This process will hereinafter be described with reference to a flow chart of Fig. 16 by way of example. A database output memory used in the following explanation is the memory provided in the data processing and outputting means 20 in Fig. 1.

In S21, the specified machine ID and period are stored in the database output memory. In S22, the machine operation history database shown in Fig. 12 is searched for the specified machine ID.

In S23, it is judged whether the date and time of a power-on operation and the date and time of a power-off operation stored in the machine operation history database of Fig. 12(a) fall within the specified period. If YES, a total power-on period within the specified period is calculated on the basis of a difference between the date and time of the power-on operation and the date and time of the power-off operation, and stored in the database output memory.

In S24, total operation periods in automatic, MDI and manual NC modes are calculated on the basis of the date and time of NC mode switching between the automatic, MDI and manual NC modes stored in the machine operation history database of Fig. 12(b), and stored in the database output memory.

In S25, a period from a set-up completion to start at cycle and a pause period after the cycle start in the automatic NC operation mode are calculated on the basis of the machine operation history database of Fig. 12(c), and stored in the database output memory.

In S26, what machining program was selected and when the machining program was selected are detected on the basis of the machine operation database of Fig. 12(d). Then, a workpiece ID is retrieved from the workpiece database of Fig. 4 on the basis of the machining program, and the machining history database is searched on the basis of the retrieved workpiece ID, whereby what workpiece was machined and when the workpiece was machined are detected. A machining period is calculated from a difference between a machining start time and a machining end time. Further, the number of machined workpieces is determined by counting the number of workpiece IDs in the machining history database. The data thus obtained is stored in the database output memory.

In S27, what alarm was issued and when the alarm was issued are detected on the basis of the machine operation database of Fig. 12(e), and an alarm interruption period is determined on the basis of a difference between an alarm start time and an alarm termination time. Further, alarm interruption periods determined in this manner are summed for determination of a total alarm interruption period within the specified period. The data thus obtained is stored in the database output memory.

In S28, a set-up period is calculated from a set-up start time and a set-up end time on the basis of the machine operation database of Fig. 12(f). Further, set-up periods determined in this manner are summed for determination of a total set-up period within the specified period. The data thus obtained is stored in the data output memory. A period that the door is opened and a period that the door is closed are calculated in substantially the same manner, and stored in the database output memory. Further, what machining operation was performed and how much time was required for the set-up for the machining operation are determined on the basis of the set-up start time, the set-up end time, and a program number and a program selection time stored in the machine operation history database of Fig. 12(d), and stored in the database output memory.

In S29, a maintenance period within the specified period is calculated on the basis of a maintenance start time and a maintenance end time in the machine operation history database of Fig. 12(g), and stored in the database output memory.

In S30, the machine operation state thus determined through the search and the calculation and stored in the database output memory is outputted.

In this manner, the NC machine tool maker can obtain the operation state of the machine tool supplied by the maker. More specifically, the NC machine tool maker can obtain information on how many hours the machine was in operation, how many hours the machine was out of operation, what workpiece was machined, how much time was required for the set-up operation, what alarm was issued, and how often the maintenance operation was performed. Though not explained, a jig and holder maker connected to the network can also obtain information on what jig was employed by the NC machine tool user for a machining operation with reference to the jig use history database.
(c) Tool information comprehensively managed by the central manager is provided to a user of an NC machine tool connected to the central manager via the network in the following manner.

The central manager comprehensively manages the tool use history database shown in Fig. 13. The database includes a machine ID for identifying a used machine tool, a workpiece ID for identifying a machined workpiece, workpiece material data, employed machining conditions such as a cutting speed, a cutting distance, a cutting width, a cutting depth, an axial feed and a radial feed, a machining start time and a machining end time for calculation of a machining period, and data indicative of whether or not a cutting fluid was used.

Based on the data described above, a reference can be made to cutting conditions under which a particular tool was used by an NC machine tool user and to the actual service life of the tool.

Where a tool maker desires to obtain the use state of a tool supplied from the maker, for example, the tool maker sends a request for referring to the use state of the tool to the data processing and outputting means 20 of the central manager 1 by specifying the name of the tool maker and the name of the tool via the information manager 102 and the network I/F 101.

The data processing and outputting means 20 outputs the use conditions of the tool and the actual service life of the tool on the basis of databases such as the tool database 6, the tool use history database 11 and the workpiece database 3, and files associated with these databases.

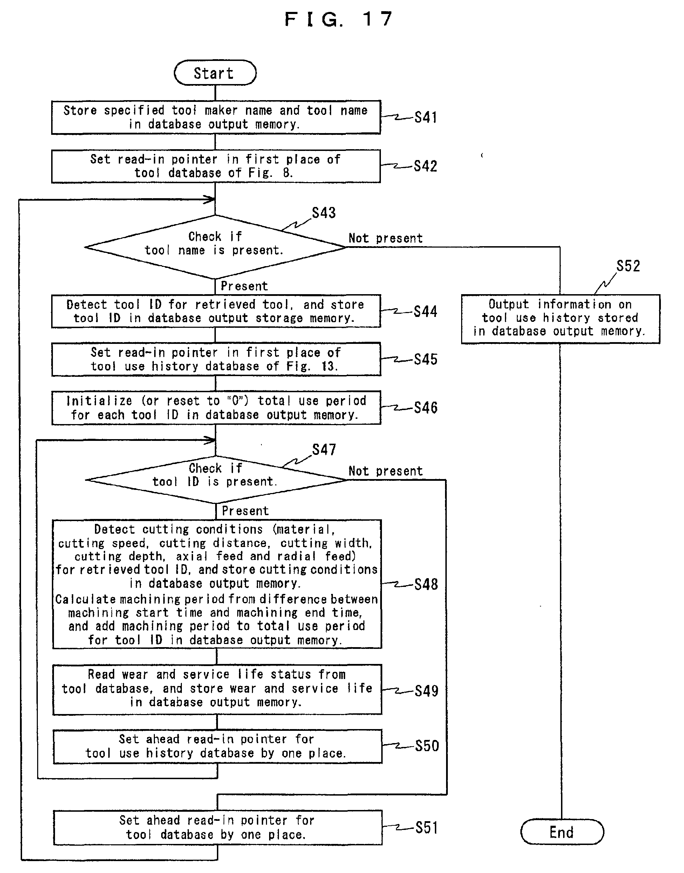

With reference to a flow chart of Fig. 17, an explanation will hereinafter be given to a case where the tool maker name and the tool name are specified for database search, and the use conditions of the tool and the actual service life of the tool are outputted. A database output memory used in the following explanation is the memory provided in the data processing and outputting means 20 in Fig. 2.

In S41, the specified tool maker name and tool name are stored in the database output memory. In S42, a read-in pointer for the tool database is set in the first place of the database. In S43, the tool database shown in Fig. 8 is searched for the specified tool name of the specified tool maker on the basis of the read-in pointer for checking if the tool name is present therein. If the tool name is not present, the process goes to S52. If the tool name is present, the process goes to S44 to retrieve information on the tool.

In S44, a tool ID for the retrieved tool is detected, and stored in the database output storage memory. In S45, a read-in pointer for the tool use history database shown in Fig. 13 is set in the first place. In S46, a total use period for each tool ID in the database output memory is initialized (or reset to "0").

In S47, the tool use history database shown in Fig. 13 is searched for the tool ID on the basis of the read-in pointer for checking if the tool ID is present therein. If the tool ID is not present, search for all machining tasks related to the tool ID is completed, and the process goes to S51. If the tool ID is present, the process goes to S48 to retrieve information on the tool.

In S48, cutting conditions (a material, a cutting speed, a cutting distance, a cutting width, a cutting depth, an axial feed and a radial feed) for the retrieved tool ID are detected, and stored in the database output memory. Further, a machining period is calculated from a difference between a machining start time and a machining end time, and added to the total use period for the tool ID in the database output memory. In S49, a wear and a service life status are read out of the tool database searched in S43, and stored in the database output memory.

In S50, the read-in pointer for the tool use history database is set ahead by one place, and the process goes to S47. In S51, the read-in pointer is set ahead by one place, and the process goes to S43.

In S52, the information on the tool use history stored in the database output memory is outputted.

In this manner, the cutting conditions and total use period of the specified tool and relationships between the cutting conditions and total machining period of the tool and the wear amount and service life status of the tool are collected, and the collected data is used for reference. Of course, the collected data may be taken into a database provided on the side of the user which requests the data.
(d) Accuracy information comprehensively managed by the central manager is provided to a user of an NC machine tool connected to the central manager via the network in the following manner.

In the central manager, the name of a machining product model accuracy information file in which an accuracy requirement for a machining product model is specified, the name of a machining product model actual accuracy file prepared on the basis of the result of measurement carried out after machining, the name of a machining part group accuracy information file in which an accuracy requirement for a machining part group is specified, the name of a machining part group actual accuracy file prepared on the basis of the result of measurement carried out after machining, the name of a machining part accuracy information file in which an accuracy requirement for a machining part is specified, and the name of a machining part actual accuracy file are stored in the workpiece database shown in Fig. 4. Further, a machine ID for identifying a machine used for the machining to satisfy the accuracy requirements and a machining part ID for identifying a tool and cutting conditions are stored in the database.

Where the NC machine tool user desires to refer to or obtain information on a jig, a tool and cutting conditions to be employed for machining a machining part specified in a machining diagram with a required accuracy, for example, the NC machine tool user sends a request for referring to machining know-how for a desired machining part to the data processing and outputting means 20 of the central manager 1 via the information manager 102 and the network I/F 101.

The data processing and outputting means 20 searches databases such as the workpiece database 3 and the task determination database and files associated with the databases to extract cutting conditions, a tool and a tool path for the machining part, and outputs the results of the search as output data to the machine tool which requests the data. The output data is employed for reference. The results of the search each including information on the tool, the cutting conditions and the tool path may be outputted after being sorted in increasing order of machining accuracy, because the actual accuracy file is registered in the workpiece database of Fig. 4.

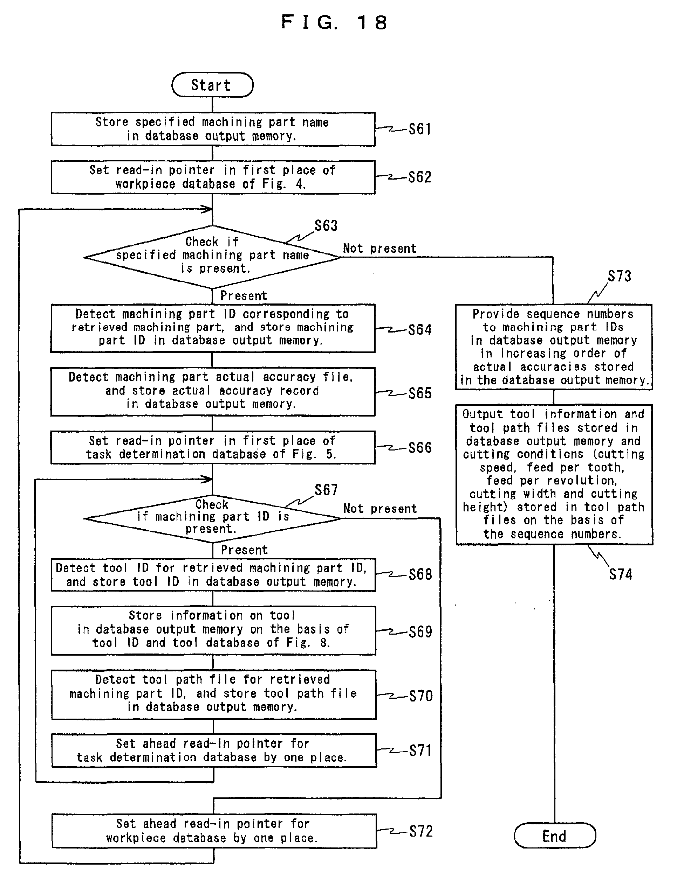

With reference to a flow chart of Fig. 18, an explanation will hereinafter be given to a case where the name of a machining part is specified for database search, and the results of the search each including information on a tool, a tool path and cutting conditions for the machining part are outputted after being sorted in increasing order of machining accuracy. A database output memory used in the following explanation is the memory provided in the data processing and outputting means 20 in Fig. 2.

In S61, the specified machining part name is stored in the database output memory. In S62, a read-in pointer for the workpiece database shown in Fig. 4 is set in the first place. In S63, the workpiece database shown in Fig. 4 is searched for the specified machining part name on the basis of the read-in pointer for checking if the machining part name is present therein. If the machining part name is not present, the database search for the specified machining part is completed, and the process goes to S73. If the machining part name is present, the process goes to S64 to further retrieve information on the specified machining part.

In S64, a machining part ID for the retrieved machining part is detected, and stored in the database output memory. In S65, a machining part actual accuracy file is detected, and an actual accuracy record is stored in the database output memory. In S66, the read-in pointer for the task determination database shown in Fig. 5 is set in the first place.

In S67, the task determination database shown in Fig. 5 is searched for the machining part ID on the basis of the read-in pointer for checking if the machining part ID is present therein. If the machining part ID is not present, the database search for all machining tasks for the machining part is completed, and the process goes to S72. If the machining part ID is present, the process goes to S68 to further retrieve information on the machining tasks.

In S68, a tool ID for the retrieved machining part ID is detected, and stored in the database output memory. In S69, information on the tool is stored in the database output memory on the basis of the stored tool ID and the tool database of Fig. 8. In S70, a tool path file for the retrieved machining part ID is detected, and stored in the database output memory.

In S71, the read-in pointer for the task determination database is set ahead by one place, and the process goes to S67 to retrieve the next machining task.

In S72, the read-in pointer for the workpiece database is set ahead by one place, and the process goes to S63 to retrieve the next machining part.

After all information is retrieved on the basis of the specified machining part name, sequence numbers are provided to the machining part IDs in the database output memory in increasing order of actual accuracies stored in the database output memory. In S74, the tool information and the tool path files stored in the database output memory and cutting conditions (a cutting speed, a feed per tooth, a feed per revolution, a cutting width and a cutting height) stored in the tool path files are outputted on the basis of the sequence numbers.

### INDUSTRIAL APPLICABILITY

As described above, the inventive NC machining assisting system is widely utilized in various industrial fields which employ NC machine tools.

## Claims

1. An NC machining assisting system **characterized in that**: a plurality of NC machine tools each including NC program generating means and NC program improving and updating means are connected to a central manager via a network; actual machining performance information is supplied to the central manager from the respective NC machine tools; the central manager generates a database on the basis of the collected actual machining performance information and stores the database therein; and the NC machine tools are each permitted to retrieve information necessary for machining from the database.

2. An NC machining assisting system **characterized in that**: a plurality of NC machine tools each including NC program generating means and NC program improving and updating means are connected to a central manager via a network; actual machining performance information is supplied to the central manager from the respective NC machine tools; the central manager generates a database on the basis of the actual machining performance information collected via the network and stores the database therein; and an apparatus other than the NC machine tools which has a network connecting function is permitted to retrieve information necessary for machining from the database through connection to the central manager via the network.

3. An NC machining assisting system as set forth in claim 1 or 2, further **characterized in that** the actual machining performance information includes at least one of workpiece information, tool information, cutting condition information, jig information, machine specification information, machining history information, machine operation history information, tool use history information and jig use history information.
